# EUROPÄISCHE PATENTANMELDUNG

(11) **EP 1 630 938 A2**
(43) Veröffentlichungstag der Anmeldung: **01.03.2006**
(21) Anmeldenummer: 05020569.9
(22) Anmeldetag: 02.05.1997
(51) Int. Cl.: H02M 3/335, H02M 3/338

(54) **Schaltnetzteil**

(30) Priorität: 15.05.1996 DE 19619751
(62) Teilanmeldung aus: 03018807.2
(71) Anmelder: DEUTSCHE THOMSON-BRANDT GMBH, 78048 Villingen-Schwenningen (DE)
(72) Erfinder: Scharlach, Peter, 76131 Karlsruhe (DE); Louvel, Jean-Paul, 78086 Brigachtal (DE); Lohrer, Stephan, 78647 Trossingen (DE)
(74) Vertreter: Arnold, Klaus-Peter

(57) **Zusammenfassung**

Die Erfindung betrifft ein Schaltnetzteil mit einem Schalttransistor, der eine an einer Primärwicklung eines Transformators anliegende Spannung periodisch durchschaltet, einem Basisstromnetzwerk und einer Schaltstufe zum Betreiben des Schalttransistors, und mit einer Regelstufe zur Stabilisierung einer Sekundärspannung, wobei der Schalttransistor während des Betriebs eine Einschaltphase, eine Sperrphase und eine Oszillationsphase aufweist.

Der Schalttransistor (TP20) des erfindungsgemäßen Schaltnetzteils wird beim Einschalten über einen hochohmigen Widerstand (RP05, RP06, RP07), eine primärseitige wicklung (6, 7) und einen Kondensator (CP24) stufenweise durchgeschaltet. Anschließend schwingt das Schaltnetzteil selbstständig über diese Wicklung (6, 7) und gesteuert durch die Regelstufe (TP24). Durch ein passives Netzwerk (DP37, DP38, RP37) parallel zur Regelstufe (TP34) wird der Schalttransistor (TP20) definiert im Minimum der ersten Oszillation der Kollektorspannung durchgeschaltet. Die Einschaltverluste des Schalttransistors sind dadurch minimal. Für einen Standby-Betrieb ist das Schaltnetzteil mit einem zusätzlichen Netzwerk (CP38, RP38) versehen, das den Schalttransistor für eine definierte Zeit durchsteuert.

## Beschreibung

Die vorliegende Erfindung betrifft ein Schaltnetzteil gemäß dem Oberbegriff des Anspruchs 1. Ein derartiges Schaltnetzteil arbeitet nach dem Sperrwandlerprinzip, bei dem während einer Einschaltphase ein Schalttransistor durchgeschaltet ist und dadurch eine Magnetisierung in einem Transformator aufgebaut wird, und während einer Ausschaltphase der Schalttransistor gesperrt ist und die Magnetisierung über angekoppelte Wicklungen des Transformators wieder abgebaut wird. Zur Verringerung der Einschaltverluste des Schalttransistors besitzt das Schaltnetzteil zusätzlich noch eine Oszillationsphase, bei der in einem Spannungsminimum einer Oszillation der Kollektor-Emitter-Spannung der Schalttransistor durchgeschaltet wird.

Schaltnetzteile dieser Art sind bekannt z.B. aus der DE 44 31 783 und der Zeitschrift Electronic World + Wireless World Dezember 1995, Seiten 1058 - 1063. Diese enthalten jeweils einen Oszillator, der die Schaltfrequenz des Schaltnetzteils vorgibt.

Aufgabe der vorliegenden Erfindung ist es, ein oszillatorloses Schaltnetzteil anzugeben, das einen stabilen Betrieb über einen weiten Eingangsspannungsbereich aufweist, und bei dem die Einschaltverluste des Schalttransistors minimal sind.

Diese Aufgabe wird durch die im Anspruch 1 angegebene Erfindung gelöst. Vorteilhafte Weiterbildungen der Erfindung sind in den Unteransprüchen angegeben.

Der Schalttransistor des erfindungsgemäßen Schaltnetzteils wird beim Einschalten über einen hochohmigen Widerstand, eine primärseitige Wicklung und einen Kondensator stufenweise durchgeschaltet. Anschließend schwingt das Schaltnetzteil selbstständig über eine weitere primäre Wicklung des Transformators und gesteuert durch eine Regelschaltung zur Regelung der Sekundärspannungen. Ein zusätzlicher selbschwingender Oszillator für den Betrieb des Schaltnetzteils wird nicht benötigt. Die Anlaufschaltung ist sehr hochohmig ausgelegt, so daß sie während des Normalbetriebes nur einen minimalen Energieverbrauch aufweist.

Das Schaltnetzteil variert die Schaltfrequenz des Schalttransistors belastungsabhängig. Es schwingt z. B. im Normalbetrieb mit einer Frequenz von ca 50 - 100 kHz, und in einem verlustarmen Standbymodus mit ca 20 kHz.

Das Schaltnetzteil benötigt nur sehr wenige aktive Bauelemente und ist deshalb sehr kostengünstig. Es besitzt eine hohe Stabilität auch bei schwankenden Eingangsspannungen und bei schwankender Verbraucherlast. Durch die geringen Schaltverluste im Schalttransistor kann die Frequenz dieses Netzteils deutlich höher gelegt werden als bei einem konventionellen Sperrwandler-Netzteil, um die gleiche Gesamtverlustleistung im Schalttransistor zu haben. Diese größere Frequenz erlaubt eine kleinere Transformatorgröße bei gleicher übertragener Leistung.

Das Schaltnetzteil enthält eine sogenannte Softstartschaltung, die in der Anlaufphase einen geringeren maximalen Kollektorstrom des Schalttransistors erlaubt als im Normalbetrieb. Da die Sortstartschaltung über eine Flybackspannung gesteuert wird, ist bei Kurzschluß auf einer sekundärseitigen Spannung (speziell Systemspannung) nur noch der geringe Kollektorstrom wie in der Anlaufphase möglich, wodurch der Schalttransistor vor Überhitzung geschützt wird.

Anwendungen der Erfindung ergeben sich insbesondere für Fernsehgeräte und Videorekorder.

Ein vorteilhaftes Ausführungobeispiel der Erfindung wird im folgenden anhand eines schematischen Schaltplanes erläutert. Es zeigen:

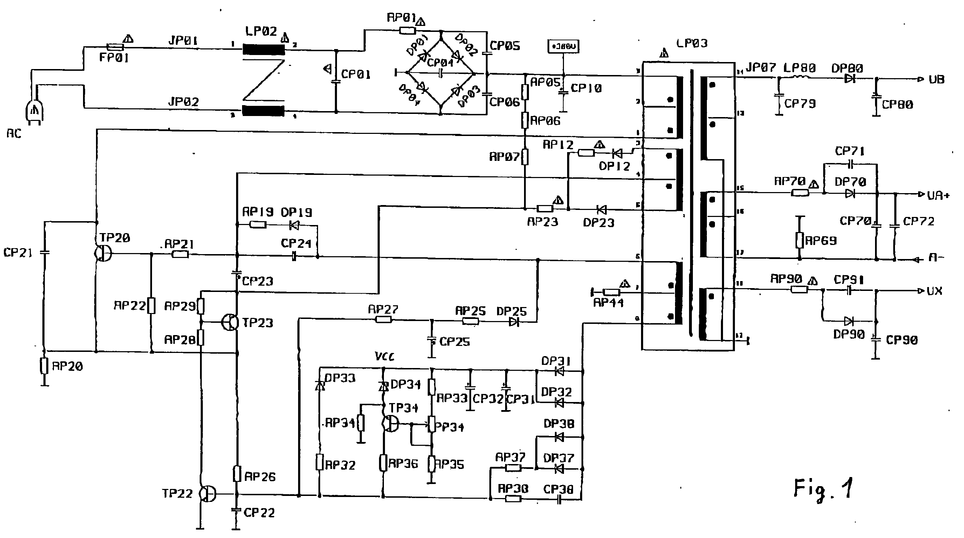

- Fig. 1: ein Schaltbild eines erfindungsgemäß ausgestalteten Schaltnetzteils.

Das Schaltbild der Fig. 1 zeigt einen Netzspannungsanachluß AC, dem ein Brückengleichrichter mit Dioden TP01 - TP04 nachgeschaltet ist zur Gleichrichtung der Wechselspannung. Diese gleichgerichtete Spannung liegt über einer ersten Primärwicklung mit Anschlüssen 9, 1 eines Transformators LP03, einer Kollektor-Emitter-Strecke eines Schalttransistors TP20 und einem niederohmigen Widerstand RP20 zur Stromdetektion an. Der Transformator LP03 besitzt eine zweite Primärwicklung mit Anschlüssen 3, 4, 5 und eine dritte Primärwicklung mit Anschlüssen 6, 7, 8 sowie Sekundärwicklungen 11 - 17 zur Erzeugung von stabilisierten Sekundärepannungen UB, ±UA und UX. Diese werden beispielsweise in einem Fernsehgerät zur Versorgung des Bildteils, des Tonteils und von elektronischen Schaltungen verwendet.

Das Schaltnetzteil arbeitet nach dem Sperrwandlerprinzip und besitzt eine Einschaltphase, eine Sperrphase und zusätzlich eine Oszillationsphase nach der Sperrphase. Während der Durchschaltphase wird in der Primärwicklung 9, 1 ein Strom aufgebaut, der eine Magnetisierung in dem Transformator LP03 bewirkt. Nachdem eine gewisse Magnetisierung aufgebaut ist, wird der Schalttransistor TP20 gesperrt. In der nun folgenden Sperrphase wird die Magnetisierung des Transformators LP03 in die Sekundärwicklungen 11 - 17 übertragen und dadurch abgebaut. Beim Übergang von der Durchlaßphase in die Sperrphase werden die an der zweiten Primärwicklung 3, 4, 5 und an der dritten Primärwicklung 6, 7, 8 anliegenden Spannungen jeweils umgepolt.

Parallel zu Kollektor und Emitter des Schalttransistors TP20 ist ein Dämpfungskondensator CP21 angeschlossen. Dieser dient zur Vermeidung von Schaltspitzen beim Abschalten und wird bei der Sperrung des Schalttransistors TP20 aufgeladen. Fällt die Magnetisierung des Transformators LP03 in der Sperrphase unter einen bestimmten Wert, so entsteht eine Oszillation zwischen der Primärwicklung 1, 9 und dem Kondensator CP21. Dies kennzeichnet die die nach der Sperrphase folgende Oszillationsphase. Während dieser Oszillationsphase fällt die Kollektorspannung des Schalttransistors TP20 periodisch im Minimum der Oszillationen bis auf eine Spannung von 0 bis 150V ab, abhängig von Netzspannung, Windungsverhältnis und Sekundärlast. Das erste Minimum ist der optimale Zeitpunkt zum Durchschalten des Schalttransistors TP20, da hier die Oszillation maximal und die zur Energieübertragung ungenützte Oszillationszeit minimal ist.

Die Basis des Schalttransistors TP20 wird durch ein Basisstromnetzwerk angesteuert, das folgende Anforderungen erfüllen muß: Es muß zum einen einen ausreichend hohen positiven Basistrom während der Durchlaßphase zur guten Sättigung des Schalttransistors TP20 bereitstellen und zum anderen einen hohen negativen Basistrom für ein schnelles Abschalten und eine negative Basisspannung während der Sperrphase des Schalttransistors TP20 liefern. Der Basisstrom während der Durchschaltphase wird über eine Vorwärtswicklung 6, 7 der dritten Primärwicklung 6,7,8 über Diode DP19, und niederohmige Widerstände RP19 und RP21 bereitgestellt.

Das Sperren des Schalttransistors TP20 wird über eine Schaltstufe mittels Transistoren TP22 und TP23 bewirkt. Diese sind über Widerstände RP26, RP28 und RP29 zu einer Darlington-Schaltung zusammengeschaltet, die ein sehr schnelles Durchschalten bewirkt. Wenn in der Durchschaltphase der Kollektor-Emitter-Strom des Schalttransistors TP20 allmählich ansteigt, steigt gleichzeitig die Spannung über dem widerstand RP20. Ab einer Spannung von ca. 0,7 V über dem Widerstand RP20 wird der Transistor TP22 und damit der Transistor TP23 durchgeschaltet. Beim Durchschalten des Transistors TP23 werden Emitter und Basis des Schalttransistors TP20 mit den Anschlüssen des Kondensators CP23 verbunden, wodurch dessen negative Ladung und Spannung den Schalttransistor TP20 sehr schnell durch den großen negativen Basisstrom entsättigt und diesen damit sehr schnell vollständig sperrt. Der Kondensator CP23 wird während jeder Durchschaltphase über die zweite Primärwicklung 3, 4, 5 und die Dioden DP12 und DP23 wieder aufgeladen.

Die Stabilisierung der Sekundärspannungen UB, ±UA und UX erfolgt durch eine primärseitige Regelstufe. Von der primärseitigen Wicklung 7, 8 wird hierfür über die Dioden DP31 und DP32 in der Sperrphase eine positive Spannung VCC abgegriffen zur Versorgung eines Transistors TP34. Dieser liefert einen von der Spannung VCC abhängigen Offset-Strom für den Kondensator CP22. Die Spannung an CP22 ergibt sich aus der Addition der Spannung durch diesen Gleichstrom und der Spannung über den Strommeßwiderstand RP20. Erreicht die Spannung an dem Kondensator CP22 ca 0,7 v, so wird der Transistor TP22 und damit der Transistor TP23 durchgesteuert und somit der Schalttransistor TP20 gesperrt wie bereits vorher beschrieben.

Zur genauen Bestimmung des Einschaltzeitpunktes des Schalttransistors TP20 im ersten Minimum der Oszillation liegt parallel zu der Regelstufe TP34 ein passives Netzwerk mit Dioden DP37, DP38 und Widerstand RP37, das über wicklungsanschluß 8 einen positiven Strom in den Transistor TP22 liefert nach dem Ende der Sperrphase.

Wenn die Magnetisierung in dem Transformator LP03 in der Sperrphase abklingt, fallen die Rückwärtsspannungen ab und alle Vorwärtsspannungen steigen an. Am Anschluß 6 steht jetzt eine positive Spannung und damit ein positiver Strom zum Durchsteuern der Basis des Schalttransistor TP20 über die Diode DP19 in RP19 bereit. Nachdem am Anschluß 8 der dritten Primärwicklung 6, 7, 8 die Spannung unter 0 V fällt und durch die Dioden DP37, DP38 und Widerstand RP37 kein Strom mehr in TP22 fließt, bleiben TP22 und 23 noch durch ihre Sättigung eingeschaltet. Erst nachdem die Transistoren TP22 und TP23 abgeschaltet haben wird der Schalttransistor TP20 durchgeschaltet. Bei optimaler Abstimmung liegt dieses Durchschalten im Minimum der Oszillation der Kollektorspannung von TP20.

Zum Einschalten des Schaltnetzteils ist eine Widerstandskette RP05, RP06 und RP07 zwischen dem positiven Anschluß des Brückengleichrichters DP01 - DP04 und dem positiven Anschluß des Kondensators CP23 angeschlossen. Zusätzlich ist noch ein Kondensator CP24 parallel zu Widerstand RP19 und Diode DP19 geschaltet. Die Widerstandskette RP05 - RP07 ist sehr hochohmig, um die auch während des Betriebes vorhandenen Verluste dieser Widerstände sehr gering zu halten, und reicht deshalb nicht aus, um den Transistor TP20 in der Anlaufphase durchzusteuern. Deshalb wird eine Mitkopplung zum Starten des Schaltnetzteiles ausgenutzt: Beim Einschalten des Schaltnetzteiles fließt ein geringer Strom durch die Widerstandskette RP05 - RP07 über den Kodensator CP23 in die Basis des Schaltransistors TP20 und erzeugt dadurch einen geringen Kollektorstrom. Dieser Strom fließt über die erste Primärwicklung 9, 1 und erzeugt dadurch eine geringe Induktionsspannung in der dritten Primärwicklung 6, 7, die zu einem Strom führt, der jetzt die Basis des Schalttransistors TP20 über Kondensator CP24 weiter aufsteuert. Durch den dadurch erhöhten Kollektorstrom wird die Magnetisierung in dem Transformator LP03 weiter erhöht und durch diese Mitkopplung wird der Schalttransistor TP20 stufenweise durchgeschaltet bis zu seiner vollständigen Öffnung. Durch einen größeren Kondensator CP24 kann der Startstrom von der gleichgerichteten (oder nicht gleichgerichteten) Netzspannung (überRP05-07) stark verringert werden. Diese Anlaufschaltung ist nicht auf Schaltnetzteile mit einer Oszillationsphase beschränkt, sie kann auch auch bei anderen Sperrwandlernetzteilen angewendet werden.

Das Schaltnetzteil enthält zusätzlich eine sogenannte Softstartschaltung, bestehend aus den Widerständen RP25 und RP27 in Reihe geschaltet zu Diode DP25 und Kondensator CP25, der zwischen den beiden Widerständen RP25 und RP27 und gegenüber Masse angeschlossen ist, und die den Kondensator CP22 mit der Wicklung 6 verbindet. Die sich über Kondensator CP22 einstellende Spannung erhöht den maximal zulässigen Kollektorstrom (detektiert über RP20) proportional zu den Flybackspannungen. Diese Schaltung bewirkt einen Softstart und minimalen Kollektorstrom bei Kurzschluß auf einer Sekundärspannung.

Im Standby-Modus ist die Leistungsabgabe des Schaltnetzteils sekundärseitig sehr gering, z.B. unter 3 W. Die Durchschaltzeit des Schalttransistors TP20 wäre dann sehr kurz, z. B. ca 200 ns. Dies entspricht einer sehr hohen Frequenz, bei der der Schalttransistor TP20 sehr schlecht durchschaltet und deshalb eine hohe Verlustleistung aufweist. Um die Einschaltphase des Schalttransistors TP20 im Standbymodus zu optimieren, ist ein passives Netzwerk aus einem Widerstand RP38 und einem Kondensator CP38 parallel zu der Regelstufe TP34 angeordnet. Wenn der Schalttransistor TP20 durchgeschaltet wird, wird die Spannung an der Windung 8 negativ. Der Kondensator CP38 zieht dann einen negativen Strom von dem Kondensator CP22 und Transistor TP22. Dadurch wird der Transistor TP22 kurzzeitig vollständig abgeschaltet und der Schalttransistor TP20 durchgeschaltet. Durch das verlängern der Einschaltphase des Schalttransistors TP20 auf über 1 µs wird ein gutes Schaltverhalten für TP20 erreicht, aber auch mehr Energie in dem Transformator LP03 gespeichert als nötig wäre. Die Schaltfrequenz reduziert sich hierdurch auf ca. 20 kHz. Dieses Netzwerk zur Erzeugung einer Mindesteinschaltdauer eines Schalttransistors ist nicht auf Schaltnetzteile mit einer Oszillationsphase beschränkt, sie kann auch auch bei anderen Sperrwandlernetzteilen angewendet werden.

Die hier vorliegende Erfindung ist eine Weiterentwicklung der in der DB 4431783 beschriebenen Patentanmeldung. Sie besitzt eine erheblich verbesserte Stabilität in einem weiten Eingangsspannungabereich und Lastspannungsbereich und ist zudem mit erheblich weniger Bauteilen aufgebaut. Die im Schaltnetzteil während des Betriebes entstehenden Verluste sind ebenfalls sehr gering und die Größe des Transformators ist verringert.

Die Dimensionen der wichtigen Bauteile des Schaltnetzteiles der Figur 1 betragen:

| Widerstand R/Ohm: | | Kapazität C: | |
|---|---|---|---|
| RD05 | 120 k | CP10 | 100 µF |
| RD06 | 120 k | CP21 | 470 pF |
| RD07 | 120 k | CP22 | 1,5 nF |
| RD12 | 0,22 | CP23 | 100 µF |
| RD23 | 0,33 | CP24 | 10 nF |
| RD19 | 39 | CP25 | 1 µF |
| RD20 | 1 | CP31 | 32 µF |
| RD21 | 4,7 | CP38 | 10 pF |
| RD22 | 4k7 | | |
| RD25 | 1k | DP33 | ZPD24 |
| RD26 | 1k | DP34 | ZPD6U8 |
| RD27 | 8k2 | | |
| RD28 | 10 | | |
| RD29 | 1k | | |
| RD32 | 1k | | |
| RD33 | 3k | | |
| RD34 | 1k | | |
| RD35 | 3k | | |
| RD36 | 3k9 | | |
| RD37 | 15k | | |
| RD3B | 10k | | |
| RD44 | 0,33 | | |

## Patentansprüche

1. Schaltnetzteil mit einem Schalttransistor (TP20), der eine an einer Primärwicklung (9, 2, 1) eines Transformators (LP03) anliegende Spannung periodisch durchschaltet, mit einer Schaltstufe (TP22, TP23) und mit einem Basisstromnetzwerk (RP19, DP19, RP12, CP23, CP24) zum Betreiben des Schalttransistors (TP20), und mit einer Regelstufe (TP34) zur Stabilisierung einer Sekundärspannung (UB, UA, UX), **dadurch gekennzeichnet, dass** das Basisstromnetzwerk (RP19, DP19, RP12, CP23, CP24) ein kapazitives Netzwerk (CP24)enthält, das in der Einschaltphase des Schaltnetzteils einen kurzen Stromstoß liefert zur Erzeugung einer Mitkopplung zwischen einer Basisstromwicklung (6, 7) zur Versorgung des Basisstromnetzwerks (RP19, DP19, RP12, CP23, CP24) und dem kapazitiven Netzwerk (CP24), wodurch eine Schwingung zwischen dieser Wicklung (6, 7) und dem Netzwerk (CP24) entsteht, die den Schalttransistor (TP20) stufenweise durchschaltet.

2. Schaltnetzteil nach Anspruch 1, **dadurch gekennzeichnet, dass** zwischen dem Basisstromnetzwerk (RP19, DP19, RP12, CP23, CP24) und dem Ausgang eines eingangsseitigen Gleichrichters ein hochohmiger Widerstand angeordnet ist, der das Basisstromnetzwerk (RP19, DP19, RP12, CP23, CP24) unabhängig von dem Transformator (LP03) mit einem geringen Strom versorgt.

3. Schaltnetzteil nach Anspruch 1 oder 2, **dadurch gekennzeichnet, dass** das kapazitive Netzwerk aus einem entsprechend dimensionierten Kondensator (CP24) besteht.
